# EUROPEAN PATENT SPECIFICATION

(11) **EP 3 272 068 B1**
(45) Date of publication and mention of the grant of the patent: **10.11.2021**
(21) Application number: 15712590.7
(22) Date of filing: 20.03.2015
(51) Int. Cl.: H04L 12/24

(54) **BUILDING AND APPLYING OPERATIONAL EXPERIENCES FOR CM OPERATIONS**
SAMMLUNG UND ANWENDUNG VON BETRIEBSERFAHRUNGEN FÜR CM-OPERATIONEN
CONSTRUCTION ET APPLICATION D'EXPÉRIENCES OPÉRATIONNELLES POUR DES OPÉRATIONS DE CM

(43) Date of publication of application: 24.01.2018
(73) Proprietor: Nokia Solutions and Networks Oy, 02610 Espoo (FI)
(72) Inventor: STENBERG, Kaj Peter, FIN-02450 Sundsberg (FI); TANG, Haitao, FIN-02620 Espoo (FI)
(74) Representative: Style, Kelda Camilla Karen
(86) International application number: PCT/EP2015/055977
(87) International publication number: WO 2016/150468

(56) References cited:
- WO-A1-2008/020722
- US-A1- 2012 257 585
- US-A1- 2014 177 450
- US-A1- 2015 033 294
- None

## Description

### Field of the invention

The present invention relates to apparatuses, methods, computer program products regarding building and applying operational experiences for configuration management (CM) operations.

### Background of the invention

There is intention to gradually evolve towards cognitive network management systems, where network future status can be predicted based on past experience and corresponding decisions made to improve either network performance or subscriber perceived experience. The target is to prevent a (network) function from executing an operation that may cause (and are known to have caused already earlier) degradation in network performance (Key Performance Indicators, KPIs) and/or unfavorable user experience, with high probability within certain network circumstances. It is also a target to make an operation of a (network) function favorable if its execution is expected to induce clear improvement in network performance / customer experience or satisfaction.

The aforementioned cognitive management requires the following information to be made available. If a function changes some parameter of a network element, the change could be notified instantly to an OSS (Operations Support System) function. In a similar way, the outcome (possible degradation or improvement achieved in network performance) caused by such a parameter value change can be recorded and stored in OSS for further diagnosis and cognitive decision making purposes. The outcome is measured by means of, e.g., certain Key Performance Indicator(s). Furthermore, the corresponding network circumstances of such an operation must also be made available for the further diagnosis and cognitive decision making purposes.

Here, parameter changes can be activated either locally (as distributed Self Organizing Networks (d-SON) or alike) or in a wider scope (as centralized SON (c-SON) or alike) for performance both qualitatively (better or worse) and quantitatively (how much better or worse).

However, (SON) function instances do not care about or are not aware of the impacts that their CM changes deliver to the network performance or customer experience, which is wider than their pre-told observation scope. Moreover, even if such impacts could be observed by a certain function, these impacts are not made available to OSS in the form of operational experience. Therefore, an OSS function (e.g., SON Coordinator) cannot filter out such SON function instances or their operations that are expected to deliver unfavorable results or performance degradations with high probability under certain network circumstances.

US 2012/257585 A1 discloses a cognitive radio (CR) WiFi network in which includes a plurality of radio environment aware WiFi terminals collect local WiFi interference information to enable a CR network management system (NMS). The CR NMS to store historical records of the interference information. The stored historical interference records is used to determine terminal-specific transmission and reception parameters.

US 2015/033294 A1 discloses an external system, such as a cloud computing environment, which receives and processes network element data from a network management system. The external system may perform information processing in order to perform sophisticated analytics.

US 2014/177450 A1 discloses a management system to correlate performance data in loosely coupled software, such as network and element management systems, with minimal overhead. The systems can be used to determine performance bottlenecks and interdependencies between components by correlating and analyzing collected data.

WO 2008/020722 A1 discloses an expandable element management system that can efficiently manage a Radio Access station and an Access Control Router, both of a wire-less communication network, and flexibly expand performance and functions of a system.

### Summary of the Invention

It is therefore an object of the present invention to overcome the above mentioned problems and to provide apparatuses, methods, systems, computer programs, computer program products and computer-readable media regarding building and applying operational experiences for CM operations.

According to a first aspect of the present invention there is provided a method for use in a logically central entity according to the subject-matter of claim 1.

According to an example, the operational experience information has been pre-processed by the various logical entities and exchanged between them via other relevant interfaces to enable the pre-processing.

According to an example, the performance data is obtained from a performance management database, the performance data being calculated by a verification function based on parameters obtained via an interface from the performance management database, and transferred back to the performance management database.

According to an example, the method further comprises calculating a diagnosis value of the executed operation based on the performance data of the executed operation and performance data of previous executed operations having similarities in at least some of the execution data, and storing the calculated diagnosis value in association with the operational experience information.

According to a second aspect of the present invention there is provided a method for use in a management entity according to the subject-matter of claim 5.

According to an example, the method further comprises:
if it is determined that the execution data have similarities,
predicting an outcome of the planned operation based on the retrieved operational experience information.

According to an example, the method further comprises:
determining whether to execute the planned operation based on the predicted outcome of the planned operation.

According to an example, the method further comprises:
identifying the execution data of an operation to be executed,
searching the central entity for stored operational experience information of previous operations based on the identified execution data,
analyzing the retrieved operational experience information of the previous operations,
if the previous operations having similarities in at least some of the execution data resulted in positive operational experiences,
retrieving parameters of the previous operations having similarities in at least some of the execution data from the operational experience information, and
applying the retrieved parameters for the operation to be executed.

According to an example, the method further comprises:
if the previous operations having similarities in at least some of the execution data resulted in negative operational experiences,
rejecting the execution of the planned operation.

According to a third aspect of the present invention there is provided an apparatus for use in a logically central entity according to the subject-matter of claim 10.

According to an example, the operational experience information has been pre-processed by the various logical entities and exchanged between them via other relevant interfaces to enable the pre-processing.

According to an example, the performance data is obtained from a performance management database, the performance data being calculated by a verification function based on parameters obtained via an interface from the performance management database, and transferred back to the performance management database.

According to an example, the at least one memory and the instructions are further configured to, with the at least one processor, cause the apparatus at least to perform:
calculating a diagnosis value of the executed operation based on the performance data of the executed operation and performance data of previous executed operations having similarities in at least some of the execution data, and
storing the calculated diagnosis value in association with the operational experience information.

According to a fourth aspect of the present invention there is provided an apparatus for use in a management entity according to the subject-matter of claim 14.

According to a fifth aspect there is provided a computer program product according to claim 15, including a program for a processing device, comprising software code portions for performing the method of any one of the first or second aspects when the program is run on the processing device.

### Brief Description of the Drawings

These and other objects, features, details and advantages will become more fully apparent from the following detailed description of aspects/embodiments of the present invention which is to be taken in conjunction with the appended drawings, in which:
Fig. 1 is an overview showing an example of an architecture to which some example versions of the present invention are applicable;
Fig. 2 is a flowchart illustrating an overall process of building operational experience instances and cases according to some example versions of the present invention;
Fig. 3 is a flowchart illustrating an example of a method according to example versions of the present invention;
Fig. 4 is a flowchart illustrating an example of another method according to example versions of the present invention;
Fig. 5 is a flowchart illustrating an example of another method according to example versions of the present invention;
Fig. 6 is a flowchart illustrating an example of another method according to example versions of the present invention;
Fig. 7 is block diagram illustrating an example of an apparatus according to example versions of the present invention.

### Detailed Description

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. In particular, a self-organizing network is used as a non-limiting example for the applicability of thus described exemplary embodiments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

In order to conduct predictive decision making based on past experience, the system (OSS) should first record the outcome of each and every operation executed (no matter if started automatically either as d-SON or c-SON or run manually by the operator). The outcome consists of the resulting performance KPI, customer perceived experience, service quality, etc., which can be taken from the SON Verification function, PM (Performance Management) functions, and CEM (Customer Experience Management) functions for example. Also important is that the system should be able to collect and store the so-called network context data such as network conditions and other relevant circumstances (e.g. cell configuration, location, traffic profile, etc.) that may have impacted on the outcome of the operation clearly. Even more important is that the system should be able to link / associate the outcome of every such operation execution and its corresponding network context data. As of today, these data (if any) are quite scattered in the system. Some data elements are stored in different places and some part of the necessary data elements are not yet stored at all, especially for the resulting impacts on network performance (e.g., it is not yet defined how to store results from SON Verification). In addition, there is no linkage info for the specifically related data elements.

To achieve what has been described above, the following three questions need to be answered:
(1) What data elements are needed to be collected, recorded, and linked as the past experiences of the executed (SON) functions?
(2) How to make the past experiences (i.e., all the necessary data) available for the cognitive decision making (i.e., predictive decision making based on past experience)?
(3) How the cognitive network management should utilize the data in predictive decision making?

It is noted that question (3) is somewhat implementation specific and hence, different implementations (answers) to it are feasible.

According to some example versions of the present invention, there is proposed a solution to build and apply operational experiences so that corresponding (SON) functions can be operated in the context of cognitive network management.

The solution according to some example versions of the present invention first defines the data elements needed for an operational experience instance concerning an operation of a (SON) function. It then defines the methods to collect, store, and further process the defined data elements.

Further, according to some example versions of the present invention, there is also defined an approach to link these data elements into a complete operational experience instance, and to further link all those similar operational experience instances into an operational experience case so that the operational experiences can be practically used for the operation of a function.

Based on these definitions, some example versions of the present invention further provide the method to make the past experiences (i.e., all the necessary data) available for the cognitive decision making (i.e., decision making based on past experience). In addition, some example versions of the present invention define a set of interfaces that serve as a critical part of the aforementioned methods and solutions.

### Architecture for collecting the Event History data

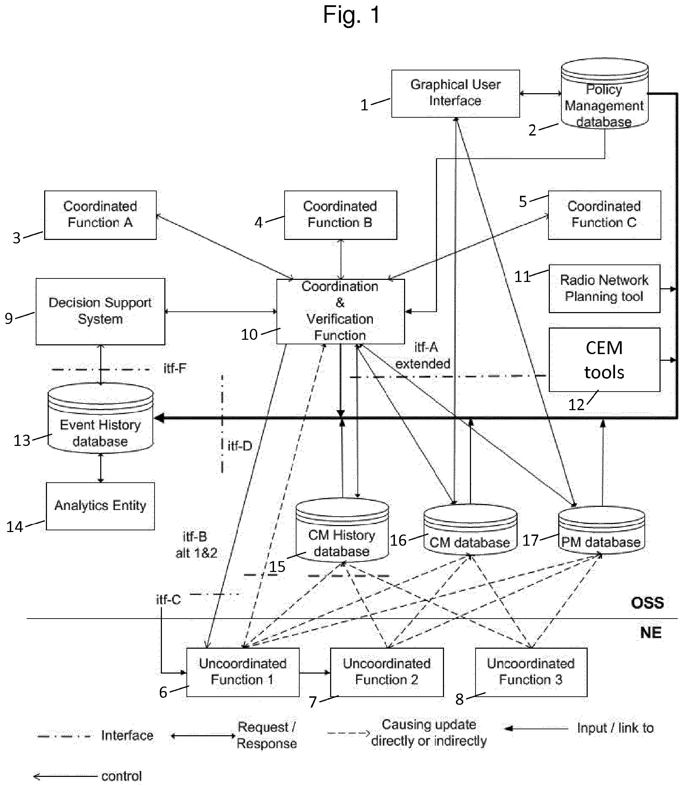

Fig. 1 shows an example of an architecture to which some example versions of the present invention are applicable.

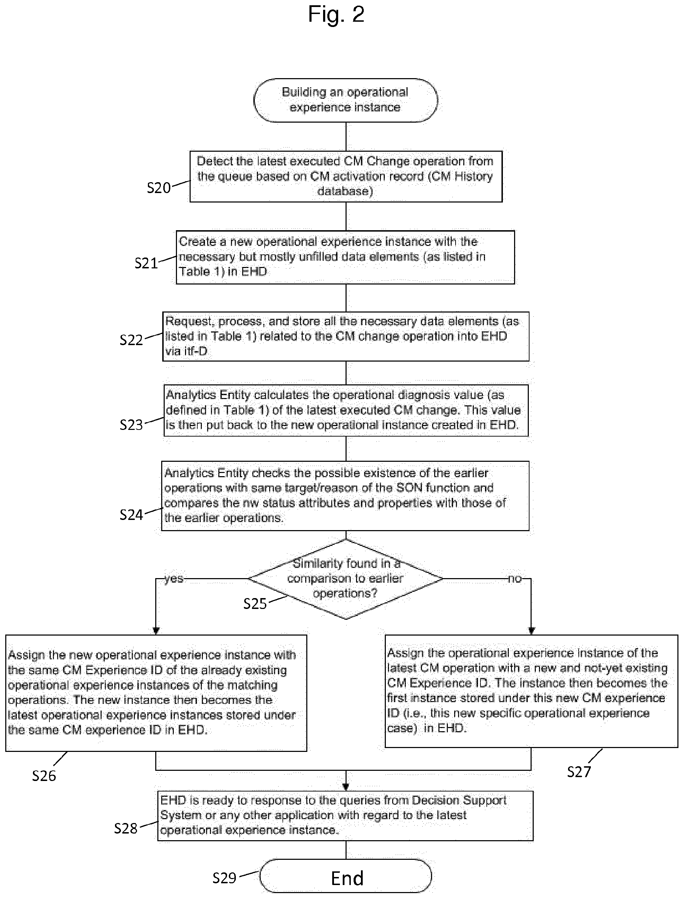

Later in the description, a high-level flowchart (Fig. 2) is given and the solution benefits are explained, which helps to understand how the whole solution works. In addition, non-limiting example use cases are given on how the cognitive network management should utilize the experience data in predictive decision making.

Fig. 1 illustrates an architecture for collecting the event history data, i.e. experience and/or verification results of the SON operations. In the following the elements constituting the architecture shown in Fig. 1 will be described.

The Graphical User Interface (GUI) 1 is used for monitoring the statuses of different (SON) operations, but also used for the insertion of different customer policy based operational steering parameters for algorithms and for other preferences (e.g. KPI thresholds to be followed, targets for optimization aka characteristics: coverage, capacity, quality, mobility, traffic throughput, etc.).

The Policy Management database 2 is a storage for different operator policy based settings for different (SON) operations in different scenarios. Settings and preferences are stored as profiles and there can be various of them stored for different purposes and scenarios depending on the type of (SON) operation and its purpose or target, cluster type, cell type, service type, etc. For each profile a unique Profile_ID must be created and linked or associated to the corresponding SON function by means of SFI_ID.

A Function 3 to 8, including coordinated functions and uncoordinated functions, denotes generally an entity that realizes certain functionality for a network / its OSS, which can be started/executed in many different ways: triggered based on event /KPI or alarm), started by operator for one time execution immediately or scheduled with certain intervals for a certain period of time, etc.

The Coordinated Function 3 to 5 can be considered as any function where its intended operation needs the decision by another function (e.g., SON coordination function) before its intended operation can be executed or revoked, etc.

The Uncoordinated Function 6 to 8 can be considered as any function that can directly induce certain changes in CM data itself without the decision of another function (e.g., SON coordination function).

A Decision Support System (DSS) 9 analyses data that is stored in an Event History database (EHD) 13, recognizes series or patterns in consecutive CM changes and their impacts on the operational experience, and draws logical conclusions based on the analysis and recognition in order to make predictive decision about the future actions for Cognitive Network Management.

A Coordination and Verification Function 10 contains two main components: Conflict detection and resolution (aka collision avoidance) as a pre-action and SON Verification for the assessment of the impact of CM changes as a post-action including automatic rollback function, in case significant performance degradation is detected.

A Radio Network Planning tool 11 contains the data (e.g. site location and antenna data) that is not available through any other database.

The CEM tools 12 are different tools that produce data (e.g. Customer Experience Insights, Traffic Distribution and location based Geo_KPIs) that can be used for the evaluation of the end user perceived experience (customer or service centric experience). Thus, they will complement the conventional PM data (reflecting mainly the network centric experience) that is used for the assessment of the CM changes in SON Verification.

The Event History database (EHD) 13 is a storage, which contains all the relevant information from the (SON) operations executed in the past. In this database different data elements are linked together such as network elements' identification to the other network conditions, configuration and circumstances together with the operational experience caused/achieved by executing a certain SON function. Operational experience is depending on the type of a (SON) function and can be understood as a result of the execution of the function (i.e. CM changes causing impact either to customer, service or network centric experience). As there is a correlation between these three different types of perceived experiences, operational experience can be considered to be a combination of those.

An Analytics Entity 14 calculates the difference between operational experience data caused by the CM change in a comparison to the situation prior to the change and stores this information (called operational experience instance) back to EHD with a linkage to the necessary data elements as described Table 1 (which is described later). It also determines the grouping of cells into different clusters according to variable attributes as listed in Table 1. The Analytics Entity 14 can be considered as an integral part of the Event History database.

A CM History database 15 is storage of the CM changes in the past. Network elements report CM changes (caused by automated or manual operations) to this database with certain information elements.

A CM database 16 contains actual network configuration, parameter values, and information elements describing the current status.

Further, a PM database 17 contains KPIs with certain time aggregation (e.g. 15 min, hourly, daily, weekly).

In Fig. 1, a dashed-dotted line indicates an interface, a double-headed solid arrow indicates a request/response, a dashed arrow indicates that direct or indirect update is caused, a solid arrow indicates control, and a bold solid arrow indicates input or link to the respective entity.

### Description and definition of interfaces

In the following, the different interfaces illustrated in Fig. 1 will be explained.

### Interface-A (extended)

Interface-A (itf-A) was introduced for querying the CM history database/file and CM database for the CM activation record and status of relevant managed object DN, etc. Now, according to some example versions of the present invention, it has been extended with "write" and "request" to the PM data in order to be able to collect the operational experience caused by these functions. The extended interface-A is needed between the SON verification function / Event History database / human operator and the CM & PM databases, as shown in Fig. 1.

This interface is defined for an OSS function (e.g., EHD function)
- to request CM History database/file for the CM activation record(s) and, if any, the relevant CM plan(s) as the following,
   ∘ Request (Impact Area, optionally Impact Time) to CM History database/file
   ∘ Response (CM activation record(s) and optionally CM plan(s), that are related to the given Impact Area) from CM History database/file
- to request CM database for the status information of a relevant CM activation / the relevant function that either made the CM activation or relates to the given Impact Area as the following,
   ∘ Request (Managed Object DN) or Request (Impact Area, optionally Impact Time ) to CM Data database
   ∘ Response (Status of Managed Object DN) or Response (one or more Statuses of Managed Object DNs that are relevant to the Impact Area and optionally Impact Time) from CM Data database
- to start and finish the calculation of CM assessment scores in SON verification
   ∘ Individual cell level KPIs to be collected for a certain period of time for the calculation of the CM assessment score of the latest executed CM operation
   ▪ Impact Area - the list of network elements (MO DNs) determines which cells will deliver cell level and/or cell pair level KPIs for SON verification function
   ▪ Starting time from - <CM activation time stamp>
   ▪ Ending time from - Impact Time: Visibility Delay: end at <UTC>
   and further, according to some example versions of the present invention, the interface is defined
- to store SON verification results to PM database
   ∘ Write (CM assessment score, SFI_ID, Entry_id) to PM database
- to request PM database for the relevant KPIs and SON Verification results that relates to the network elements of the given Impact Area
   ∘ Request (Managed Object DN) or Request (Impact Area), Request (Time stamp of CM activation), or Request (Impact Time: Visibility Delay end at <UTC>) to PM database
   ∘ Response (Feature impact KPI(s) of the Managed Object DN relative to the Time stamp of CM activation) or Response (SON Verification results of one or more Managed Objects DNs that are relevant to the Impact Area and Impact Time)

### Interface-B, alternative 1 & 2

Interface-B (itf-B) was introduced to request relevant uncoordinated functions for the missing history information of a CM activation either indirectly (alterative 1) or directly (alternative 2). As such it is not relevant within the present invention for the collection of operational experience. However, the information stored in CM History database via itf-B is very important for linking the reason and target of a specific SON (or alike) function into the EHD with the rest of the relevant data elements.

### Interface-C

Interface-C (itf-C) was introduced to provide control for an uncoordinated function. Not directly relevant for the present invention, however visible in the architecture description, see Fig. 1.

### Interface-D

According to some example version of the present invention, a new interface-D (itf-D) is defined which is the main interface to collect all the necessary information and data elements to be stored into the Event History database (EHD). As such, it can be considered as the main data interface that connects different architecture components to the EHD. It should be also extendable to support more data sources (Big Data), which may provide important new data elements relevant for the evaluation of the operational experience in the future.

This interface is defined to collect and store all the relevant data elements (as listed in Table) of the operational result caused by the execution of a (SON) function (or CM change operation).

Interface D supports EHD to request all the relevant databases and tools as shown in Figure 1. Itf-A serves itf-D to support the requests of the EHD to the CM History and PM databases as shown in Fig. 1. As an alternative, itf-B can serve itf-D to support the EHD requests to uncoordinated functions. The main purpose of itf-A and itf-B in this context is to guarantee that all of the necessary data of executed CM functions is stored in CM History and PM databases and thus made available for the EHD.

In summary, itf-D supports EHD to request for the following data concerning the executed function instance (e.g., c-SON) or uncoordinated CM change operation (e.g., d-SON):
- the CM activation record(s) from CM History database/file and, if any, the relevant CM plan(s) as the following,
   ∘ Request (SFI_ID, entry_id, Impact Area, optionally Impact Time) to CM History database/file
   ∘ Response (CM activation record(s) from CM History database and CM plan(s), that are related to the given Impact Area) from CM database
- the reason or target of the SON function either from Policy Management or CM History database
   ∘ Request (SFI_ID, entry_id) to CM History database or Policy Management database
   ∘ Response (reason and target of the SON function, optionally also the network (nw) characteristic) from CM History database or Policy Management database
- the KPI thresholds that are meaningful for triggering the SON function of interest from the corresponding profile that has been stored in Policy Management database
   ∘ Request (SFI_ID) from Profile stored in PMD
   ∘ Response (KPI threshold settings inserted by operator)
- the operation execution state of the given SON function from SON Coordinator
   ∘ Request (SFI_ID, entry_id, MO DN) to SON Coordinator
   ∘ Response (operation execution state) from SON Coordinator (SON Function operational state register)
- the operational result caused by the execution of the given SON function or CM change operation
   ∘ Request (MO DN, timestamp for collecting operational experience) to PM database or
   ∘ Request (SFI-ID, entry_id, and optionally timestamp for collecting operational experience) to SON Coordinator
   ∘ Response (CM assessment score and/or individual/group of feature impact KPIs) from PM database or (Rollback activation record) from SON Coordinator
   ∘ Request (SFI_ID, entry_id, MO DN, timestamp for collecting operational experience) to CEM tools
   ∘ Response (customer and service centric triggers and KPIs, Geo-KPIs and events and other subscriber experience centric KPIs from the cells as requested by MO DN) from CEM tools
- the network status attributes and properties of the corresponding SON Function instance or CM change operation
   ∘ Request (SFI_ID, entry_id) to SON Coordinator to fetch the related MO DNs from the SOI's metadata
   ∘ Response (impact area of the CM operation, i.e. list of related MO DNs) from SON Coordinator
   ∘ Request (MO DN) to RNP-tool to collect more insights into cell characteristics
   ∘ Response (cell cluster type, site/antenna location, antenna attributes)
   ∘ Request (MO DN) to CM database to collect more information of the cell type&size, other configuration patterns and relevant parameter values of the cells
   ∘ Response (cell type&size, antenna attributes, other relevant configurations and parameter values) from CM database
   ∘ Request (MO DN, time period as <start time-end time>) to CEM tools to export the traffic pattern of the cells
   ∘ Response (traffic pattern and related attributes of the listed cells)
   ∘ Request (MO DN, time period as <start time-end time>) to CM History database for extracting additional information for cell clustering according to operational pattern
   ∘ Response (attributes related to operational pattern see Table 1) for the requested cells

The outcome (i.e. the operational result) caused by the known (SON) function with all of the other relevant attributes are then linked together and stored in the same record in EHD.

### Interface-F

According to some example version of the present invention, a new interface-F (itf-F) is defined for the DSS to request specific experience info from EHD for, e.g., further analysis, pattern recognition, and predictive decision making. The specific experience (if any) would relate to some historical operational experience(s) of the CM operation(s) executed in the past within certain cell clusters (i.e. group of cells with similar nw status and attributes),
- Requests from DSS to EHD
   ∘ Request (SFI_ID of planned/intended CM operation and its Impact area with nw status attributes and the planned size of the change in parameter value(s) or in any other CM settings) to Event History database
   ∘ Request (Target of CM change and Impact Area with nw status attributes and current CM data) to EHD
- Responses from EHD to DSS
   ∘ Response (expected operational experience with certain probability if the planned CM operation would be executed in similar nw status conditions) from EHD, or
   ∘ Response (proposal for next CM operation that will help to achieve the requested CM intention / target with certain probability incl. proposal for the size of the coming change in CM settings or parameter values) from EHD

### Definition of data elements of an operational experience instance

The following Table 1 defines the data elements needed for an operational experience instance induced by the CM change of a function (SON or alike). That is, a specific CM operation creates a specific operational experience instance. A specific operational experience instance can be identified uniquely in the same way as its originating CM change function - by its specific SFI_ID and Entry_id. In Table 1, some of the data elements are not new individually themselves, since they have been defined before. However, constructing the data elements into an operational experience instance is new. Further, some those data elements are newly defined in the table, which is specifically indicated in the table. This table also shows the different data sources from where the data elements can be collected for the operational experience instance. These data elements need to be collected and stored/linked into the Event History database via interface-D.

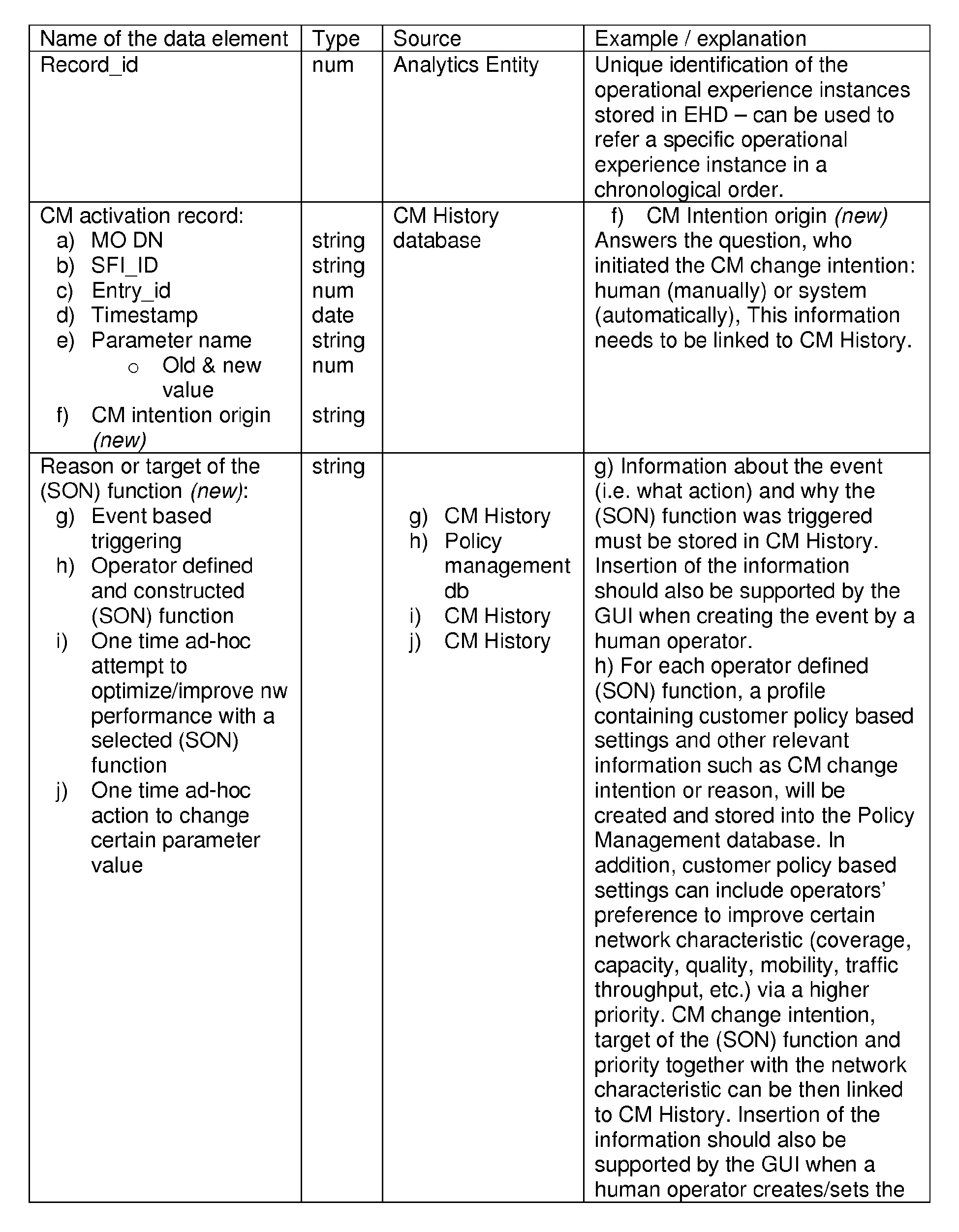

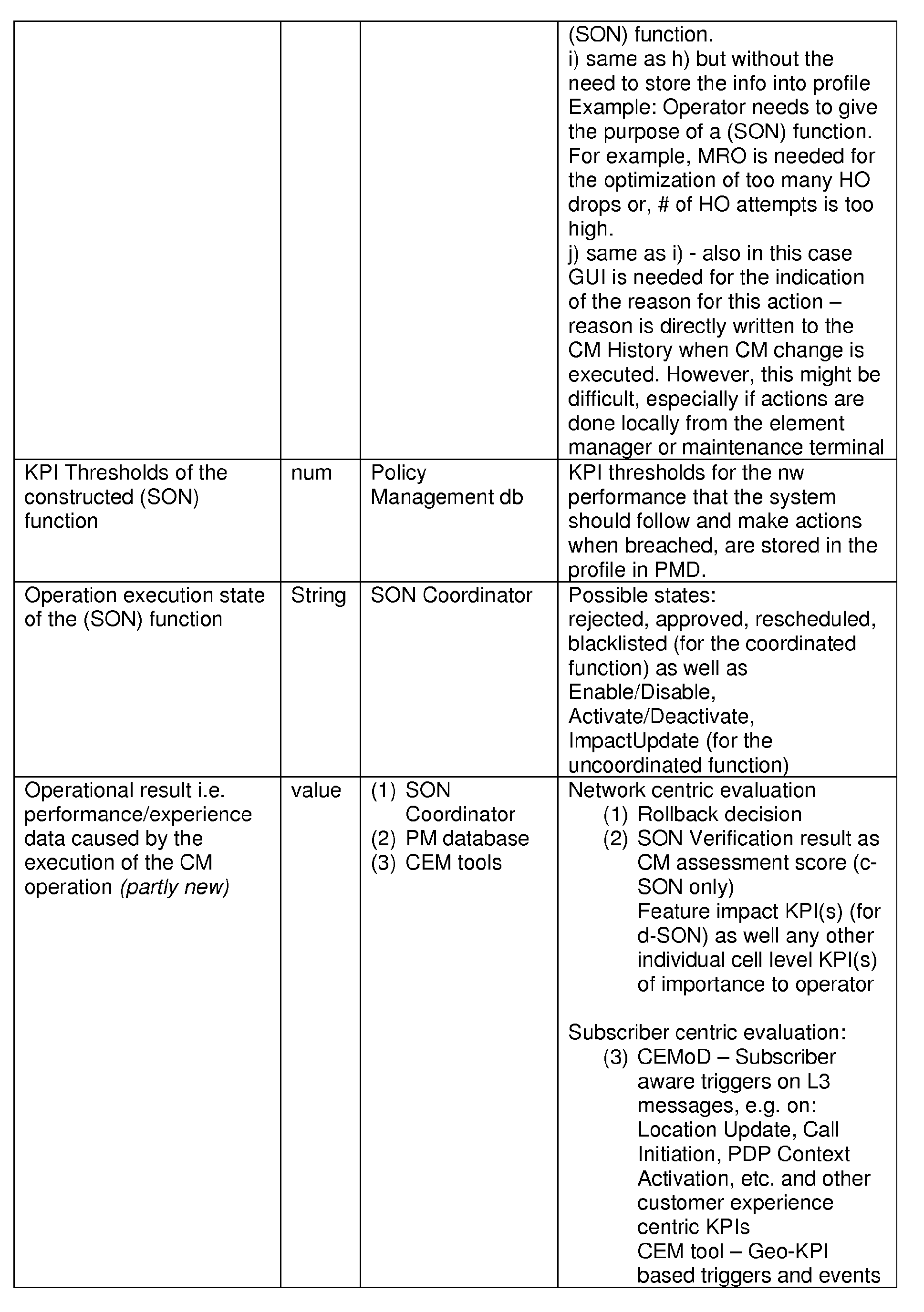

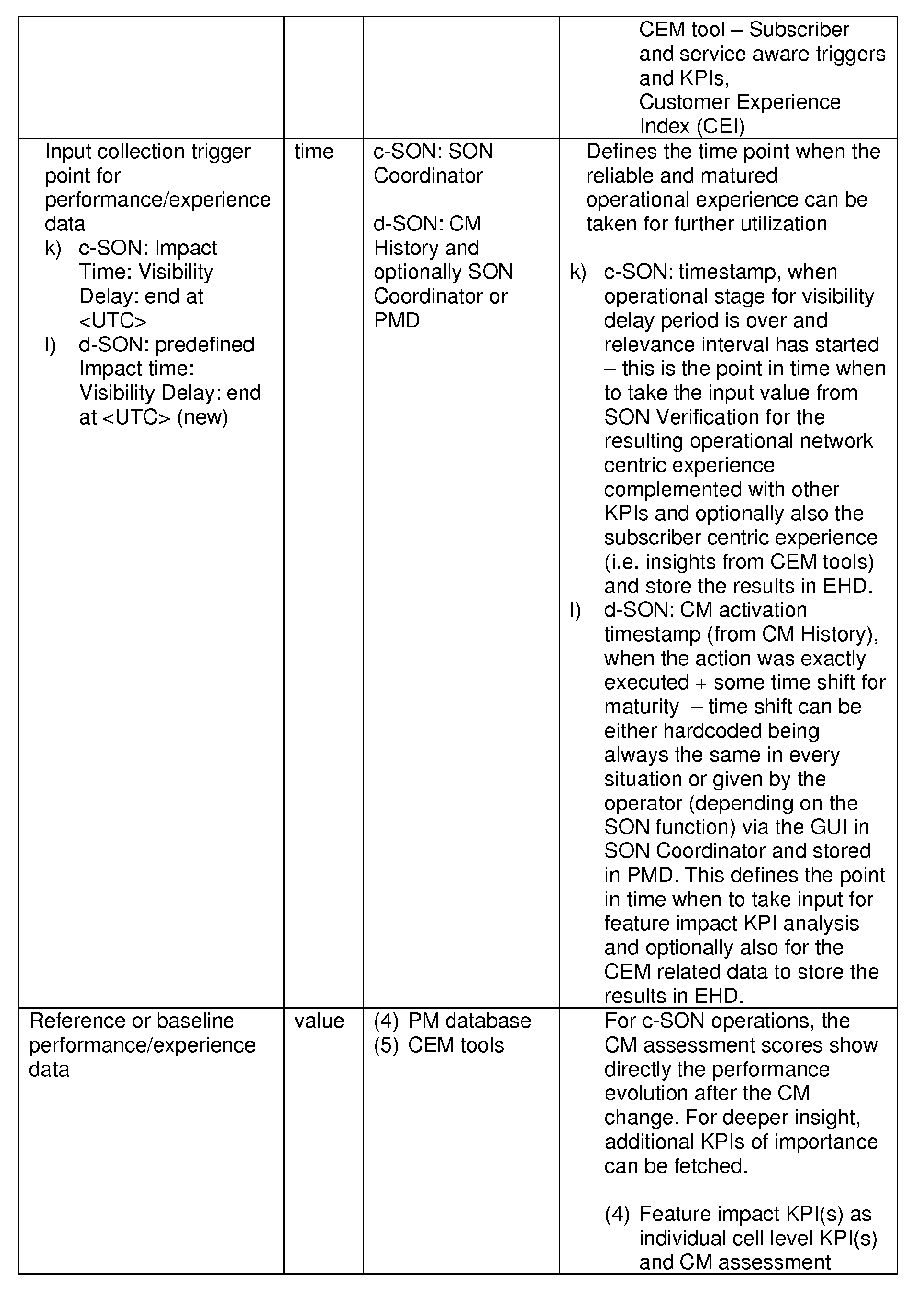

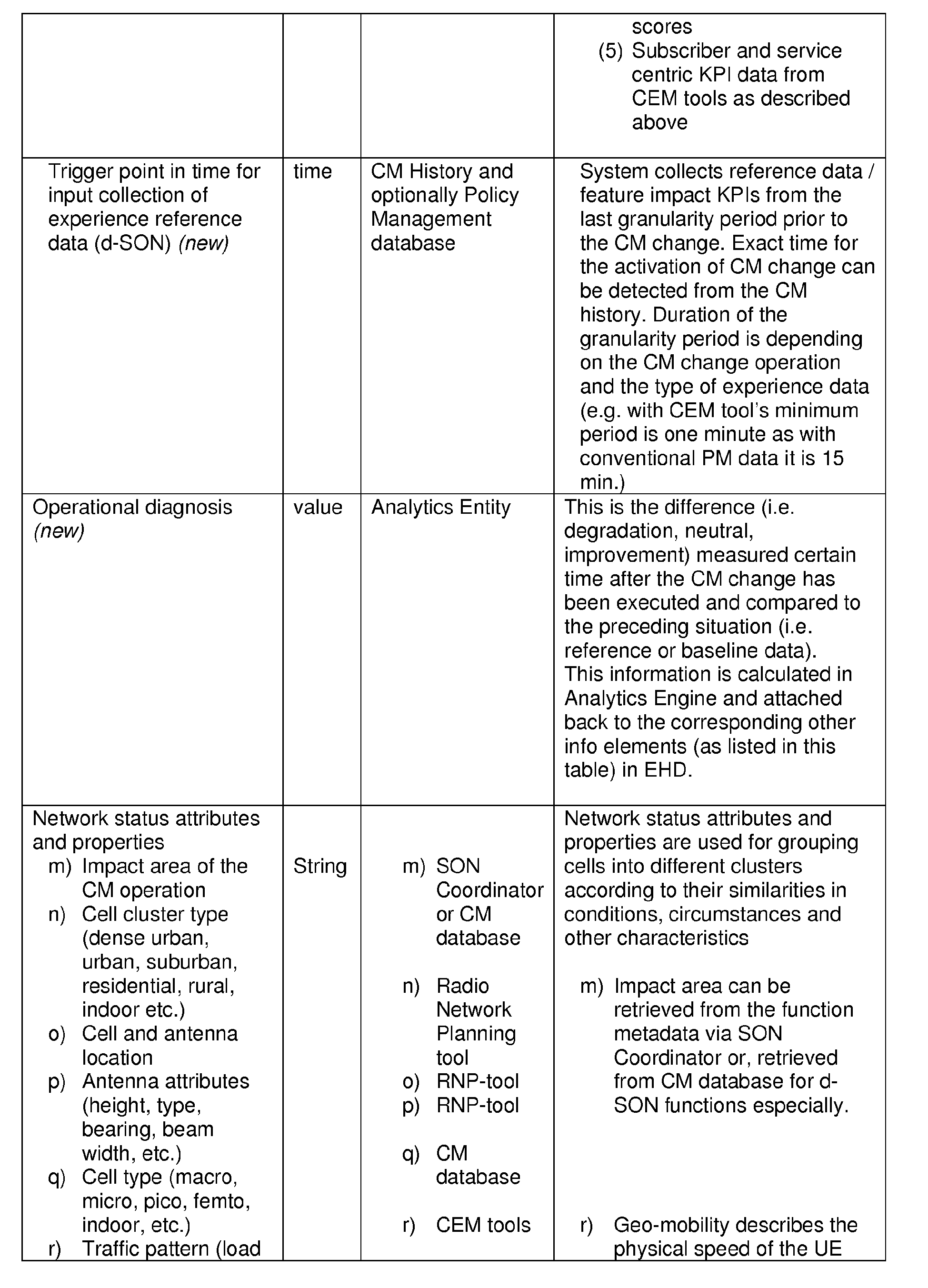

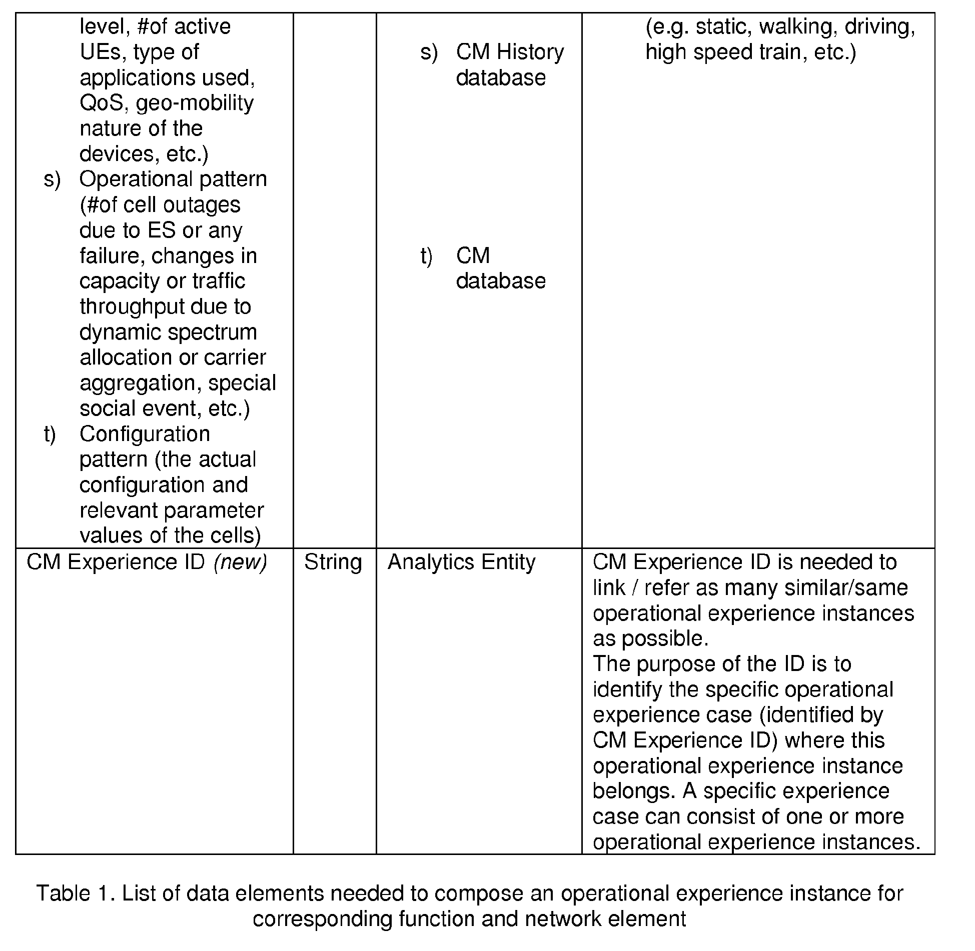

### Method to collect and store the operational experience data for a CM operation

According to some example version of the present invention, there is proposed a method for collecting and storing the operational experience data for a CM operation.

It is proposed to collect and store the resulting network centric experience data (CM assessment scores or feature impact KPIs) complemented with subscriber centric experience data from CEM tools. All of the data must then be linked to the corresponding network elements and to the originating (SON) function or CM change operation together with the target/reason for the function/CM change itself. All of the necessary data elements and information shall be stored into / made available at the same place (i.e. Event History database) for further processing and analysis.

Within the context of coordinated operation (e.g., centralized SON), the impact of the CM change can be verified by a special function called (SON) verification. This is done by giving CM assessment scores in cycles in order to follow-up the performance evolution after the CM change has been executed, with the CM assessment score attached as a part of the operational experience data directly to the corresponding function.

The solution according to some example versions of the present invention proposes to store the CM assessment score (from SON verification function) in the PM database tables together with the other KPIs so that the synchronization of the CM assessment cycle is correlating with the corresponding PM granularity. As described above, Interface-A can be extended to serve as the interface between the verification function and the PM database (see Fig. 1). The extension needs to be defined in order to be able to start and finish the collection of selected individual cell level KPIs for the calculation of the CM assessment score in SON coordinator / SON verification function. The CM assessment score will then be sent back to PM database and stored there within the same granularity as the KPIs used for the calculation.

The CM Assessment scoring only reflects the evolution of the network centric experience. Optionally, it can be complemented by any other individual cell level KPI that has importance to operator and optionally also by CEM data in order to indicate better the subscriber centric experience as well.

Within the context of uncoordinated operation (e.g., distributed SON or other), the method to collect the resulting outcome or experience data is very much similar to the c-SON case. Actually the only difference is the availability of the CM Assessment scoring, as this is not computed by SON verification function for d-SON operations. Rather, the outcome can be verified based on predefined list of "feature impact KPIs" stored in PM database respectively.

### Method to calculate the operational diagnosis for a CM operation

Further, according to some example versions of the present invention, there is proposed a method for calculating the operational diagnosis for a CM operation.

According to this method, the Analytics Entity calculates the operational diagnosis (OD) for a specific CM operation. It requires both the resulting performance and/or experience data caused by the latest CM change as well as the earlier corresponding reference data as an input from EHD to Analytics Entity. The operational experience instance is then calculated by comparing the latest resulting performance to the baseline (i.e. to the situation/performance data before executing the CM change). In this way the evolution of the network performance or customer perceived experience can be demonstrated.

In this case the OD is calculated as a delta between the performance/experience data of the last operation in a comparison to the data prior to that CM change, when the other attributes are considered unchanged or approximately the same. The resulting OD is then attached back to the originating CM operation together with the rest of the attributes (as shown in Table 1). The newly created record is then labeled with a unique identification (i.e. record_id), which can be allocated by the system based on the activation timestamp in CM History (entry_id as such does not necessarily reflect to the order of operations taking place in time). In this way, the records can be organized in a chronological order and, the evolution of the performance/experience in certain area can be analyzed over certain period of time.

### Method to assign a specific CM Experience ID to the operational experience instance of a specific CM operation

Furthermore, some example versions of the present invention propose a method for assigning a specific CM Experience ID to the operational experience instance of a specific CM operation.

This method is needed for the operation experience instances of both coordinated function and uncoordinated function. Collecting, processing, and storing of the data as described above is only the first step in making an operational experience instance available. In the next step, Analytics Entity has to determine and assign a CM Experience ID for the operational experience instance based on the attributes as listed in Table 1.

The computation of CM Experience ID requires the nw status attributes and properties (as listed in Table 1) as input from EHD to Analytics Entity. As soon as there is a new CM operation event (identified by unique SFI_ID and entry_id) stored in the EHD, Analytics Entity checks the possible existence of the earlier operations with same target/reason of the SON function and compares the nw status attributes and properties with those of the earlier operations.

In case similarity with some of the earlier operations is found, the given new CM operation becomes the latest one in that sequence of similar CM operations stored already in the event history, where their operational experience instances are all linked by an already existing CM Experience ID as one individual operational experience case together. The operational experience instance of the new CM operation is thus assigned with this existing CM Experience ID.

Similarity is a metrics that tells how close / different two given operational experience instances are from each other, where the similarity is assessed based on a relevant similarity measure.

In case no matching to earlier ones can be found, the operational experience instance of the new CM operation is then assigned with a new and not-yet-existing CM Experience ID. That is, this operational experience instance is then the first operational experience instance of a new operational experience case.

### Method to utilize the operational experience for cognitive decision making

In the following, a method to utilize the operational experience for cognitive decision making according to some example versions of the present invention is described.

The cognitive network management and predictive decision take place in the Decision Support System (DSS). They utilize the experience info stored in EHD. DSS can be understood as a machine learning engine that takes input from EHD for its algorithms used, e.g., for pattern recognition, data search and different query purposes. In order to make the data stored in EHD available for further queries and analysis in DSS, a new interface (itf-F) is needed between DSS and EHD.

Fig. 2 is a diagram illustrating a summary of the above described methods and depicts the process and data flow to make an individual operational experience instance and then group it into a specific operational experience case according to some example versions of the present invention.

In step S20, the latest executed CM change operations are detected from the queue based on CM activation record (CM History database).

Then, in step S21, a new operational experience instance with the necessary but mostly unfilled data elements (as listed in Table 1) is created in the EHD.

Further, all the necessary data elements (as listed in Table 1) related to the CM change operation are requested, processed and stored into EHD via itf-D in step S22.

Then, the Analytic Entity calculates in a step S23 the operational diagnosis value (as defined in Table 1) of the latest executed CM change. This value is then put back to the new operational instance created in EHD.

Further, in step S24, the Analytic Entity checks the possible existence of the earlier operations with same target/reason of the SON function and compares the nw status attributes and properties with those of the earlier operations.

If it is determined a step S25, that a similarity is found in a comparison to earlier operations (Yes in step S25), the procedure proceeds to step S26. Otherwise (No in step S25), the procedure proceeds to step S27.

In step S26, the new operational experience instance is assigned with the same CM Experience ID of the already existing operational experience instances of the matching operations. The new instance then becomes the latest operational experience instance stored under the same CM experience ID in EHD.

In step S27, the operational experience instance of the latest CM operation is assigned with a new and not-yet existing CM Experience ID. The instance then becomes the first instance stored under this new CM Experience ID (i.e. this new specific operational experience case) in EHD.

Then, in a step S28, the EHD is ready to respond to the queries from the Decision Support System or any other application with regard to the latest operational experience instance.

In a step S29, the procedure ends.

### Example benefits of the operational experience instances

In the following there are described some example benefits of the operational experience instances.

As mentioned already earlier, it can be assumed that, with similar CM changes in same type of conditions and circumstances, a same kind of operational experience can be achieved with high probability. As this information is stored into the Event History database, it can be used for predictive decision making - as soon as there is statistically sufficient amount of operational experience instances stored and when the network conditions and circumstances are known with the planned next SON function to be executed in the future. The Decision Support System is able to predict the possible expected outcome with some precision already before the SON function is even executed.

The utilization of operational experience history (in form of operational experience instances stored in the EHD) in predictive decision making gives the operator significant advantages:
1) CM change operations/functions resulting in nw performance degradation or rollback in certain conditions can be avoided in advance in similar conditions
2) CM change operations/functions resulting in nw performance improvements in certain conditions can be made favorable in cases with similar conditions
3) CM change operations/functions, that have succeeded to satisfy operator's targets for the optimization or nw performance evolution, can be made preferable (e.g. prioritized higher or started more frequently, etc.)
4) Selection of the CM change operation according to operator's target. For example, operator is interested in improving mobility (e.g. HO success rate)
   - Selection of the specific CM Change operation (to be executed next) that has recorded the highest success in operational experience instance in the past e.g. with regard to improvement of HO success rate
   - Selection of the specific parameter value or any other attribute value (for the CM operation to be executed next) that has resulted in the highest operational experience instance in the past e.g. with regard to improvement of HO success rate

### Example use cases of the operational experience instances

In the following there are defined a few listed use cases and examples on how the DSS would utilize the operational experience data stored in the EHD.

Below are a few listed use cases on how DSS would utilize the operational experience instances stored in the EHD, while its corresponding itf-F definition is already described above.
1. Referral of the current or planned CM intention to the stored operational experience history
   a. If same or similar CM operations in the past have failed or been frequently rolled back, DSS could consider that the current or planned CM intention would most likely result the same. In that case, this kind of CM intention could be rejected straight away.
   b. Under the given network status, possibly there has been some other CM operation in the past that have caused the targeted improvements. In this case, the system (e.g., DDS) can automatically propose the historical CM operation to be executed again if the current nw status is similar to the historical one.
2. Operator can search for ideas based on the stored operational experience history, for what to do or how to improve nw status through
   a. Identifying the current nw status of the interested area or group of cells
   b. Using the current nw status as index to search the stored experience history.
   c. If same or similar case is found, the query will return the CM operation(s) that have caused the earlier (favorable) experience.
   d. If same or similar case is found, the query can also return the CM settings and parameter values of the earlier CM operation(s) that have caused the targeted/wanted earlier experience. Proposal to use the same settings with the next CM operation with similar performance or experience target can be made.
3. Prediction of a future CM operation based on the stored operational experience history through
   a. Using the past CM operations and the intended future CM operation as the index to search the stored experience history
   b. If the matching CM operation(s) are found and their nw statuses are same or similar in a comparison to the nw status causing the intended future operation, EHD reports the achievement made by the historical CM operation at the end of the match (that is matching the proposed CM operation).
   c. If multiple such matching is found, EHD reports the averaged achievement made by those historical CM operations at the end of the matches.
   d. Using the reported achievement to answer - what will be the most probable achievement (e.g. improvement and how much) if the intended CM operation would be executed.

In the following, there is shown an example how the DSS could use the operational experience history stored in EHD to make its cognitive decisions:

EHD contains all the historical operational experience instances sorted by their CM Experience IDs. As soon as certain number of records (within same CM Experience ID) has been exceeded, statistical validity has been reached. This means, that a certain probability can be calculated based on the past operational experiences to reflect the chances of achieving improvement/degradation with the next planned CM change operation of similar type.

As an example, let's say that there have been 100 operational experience instances recorded under CM Experience ID "12" in Event History database, 80 of the operations have resulted in positive operational experience, respectively, 15 of them in negative and 5 have resulted in rollback. Based on the statistics, it can be presumed that with 80% probability the next (future) CM change operation that matches with CM Experience ID "12" would result in positive operational experience. With such a high probability, it would be a favorable operation for the operator or system to execute.

Not only being able to respond to the qualitative aspect of the changes (better or worse), can the system be implemented to support also the decision making from the quantitative perspective (how much better or worse?). For that sake, the system should be able to keep count on positive, neutral and negative (incl. rollback) operational experience instances within the same operational experience case (i.e. identified by its CM Experience ID). It would be also possible to compute the quantity of the expected operational experience in advance based on the past records. For example, if CM operation (e.g. antenna tilt optimization with 2 degree down tilt) has caused on the average an improvement of 5% better HO success rate when averaged over all the relevant operational experience instances stored in EHD under the same CM Experience ID, then that would be the expected operational experience when a next similar CM operation will be executed.

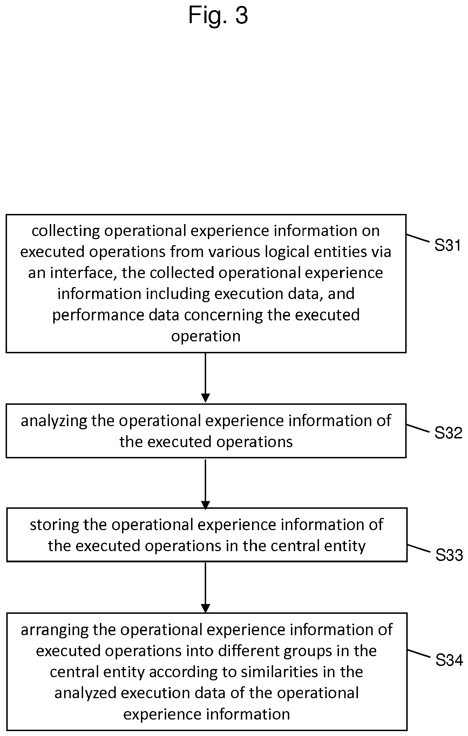

In the following, a more general description of example versions of the present invention is made with respect to Figs. 3 to 7.

Fig. 3 is a flowchart illustrating an example of a method according to example versions of the present invention.

According to example versions of the present invention, the method may be implemented in or may be part of logically central entity, like an EHD including an analytics entity or the like. The method comprises collecting operational experience information on executed operations from various logical entities via an interface in a step S31, wherein the collected operational experience information include execution data, and performance data concerning the executed operation. The method further comprises analyzing the operational experience information of the executed operations in step S32, storing the operational experience information of the executed operations in the central entity in step S33, and arranging the operational experience information of executed operations into different groups in the central entity according to similarities in the analyzed execution data of the operational experience information in step S34.

According to example versions of the present invention, the operational experience information has been pre-processed by the various logical entities and exchanged between them via other relevant interfaces to enable the pre-processing.

According to example versions of the present invention, the performance data is obtained from a performance management database, the performance data being calculated by a verification function based on parameters obtained via an interface from the performance management database, and transferred back to the performance management database.

According to example versions of the present invention, the method further comprises calculating a diagnosis value of the executed operation based on the performance data of the executed operation and performance data of previous executed operations having similarities in at least some of the execution data, and storing the calculated diagnosis value in association with the operational experience information.

According to example versions of the present invention, the method further comprises arranging the operational experience information based on an identifier assigned to each of the operational experience information, where operational experience information having similarities in the execution data have the same identifier and are arranged in the same group.

According to example versions of the present invention, the performance data of the executed operation includes at least one of an assessment score, key performance indicators, customer perceived experience, service quality.

The execution data includes all the data particles relevant for the execution of the SON operation (such as activation data, records, reason/target, status attributes, trigger points, etc. as listed in table 1).

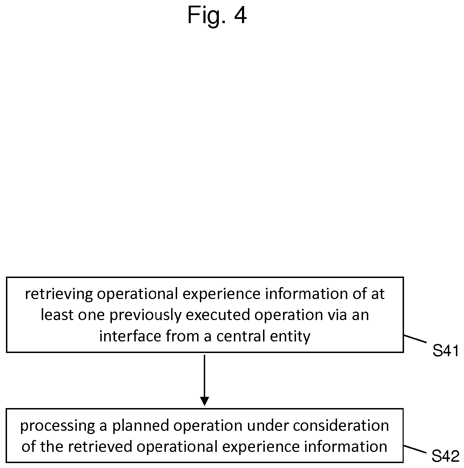

Fig. 4 is a flowchart illustrating another example of a method according to example versions of the present invention.

According to example versions of the present invention, the method may be implemented in or may be part of a management entity, like a Decision Support System or the like. The method comprises retrieving operational experience information of at least one previously executed operation via an interface from a central entity in step S41, and processing a planned operation under consideration of the retrieved operational experience information in step S42.

According to example versions of the present invention, the method further comprises analyzing execution data included in the operational experience information and determining whether the execution data of the previously executed operation have similarities with at least some of the execution data of the planned operation, if it is determined that the execution data have similarities, predicting an outcome of the planned operation based on the retrieved operational experience information.

According to example versions of the present invention, the method further comprises determining whether to execute the planned operation based on the predicted outcome of the planned operation.

According to example versions of the present invention, the method further comprises identifying execution data of an operation to be executed, searching the central entity for stored operational experience information of previous operations based on the identified execution data, analyzing the retrieved operational experience information of the previous operations, if the previous operations having similarities in at least some of the execution data resulted in positive operational experiences, retrieving parameters of the previous operations having similarities in at least some of the execution data from the operational experience information, and applying the retrieved parameters for the operation to be executed.

According to example versions of the present invention, the method further comprises, if the previous operations having similarities in at least some of the execution data resulted in negative operational experiences, rejecting the execution of the planned operation.

According to example versions of the present invention, the method further comprises arranging the operational experience information based on an identifier assigned to each of the operational experience information, where operational experience information having similarities in the execution data have the same identifier and are arranged in the same group.

According to example versions of the present invention, the performance data of the executed operation includes at least one of an assessment score, key performance indicators, customer perceived experience, service quality, and the execution data include at least one of activation data, records, reason, target, status attributes, and triggers concerning the executed operation.

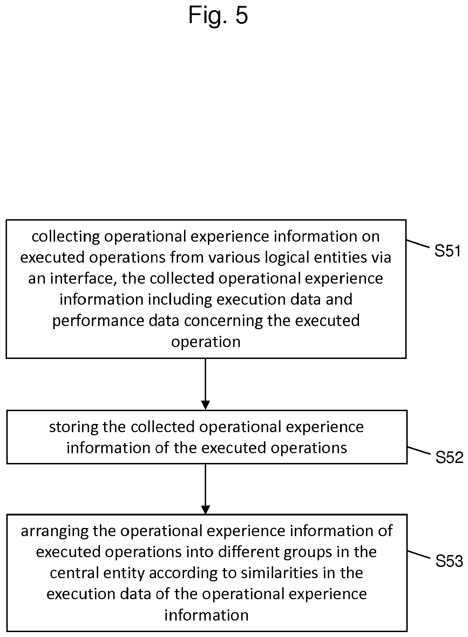

Fig. 5 is a flowchart illustrating an example of a method according to example versions of the present invention.

According to example versions of the present invention, the method may be implemented in or may be part of a logically central entity, like a EHD or the like. The method comprises collecting operational experience information on executed operations from various logical entities via an interface in step S51, the collected operational experience information including execution data and performance data concerning the executed operation, storing the collected operational experience information of the executed operations in step S52, and arranging the operational experience information of executed operations into different groups in the central entity according to similarities in the execution data of the operational experience information in step S53.

According to example versions of the present invention, the method further comprises arranging the operational experience information based on an identifier assigned to each of the operational experience information, where operational experience information having similarities in the execution data have the same identifier and are arranged in the same group.

According to example versions of the present invention, the performance data of the executed operation includes at least one of an assessment score, key performance indicators, customer perceived experience, service quality, and the execution data include at least one of activation data, records, reason, target, status attributes, and triggers concerning the executed operation.

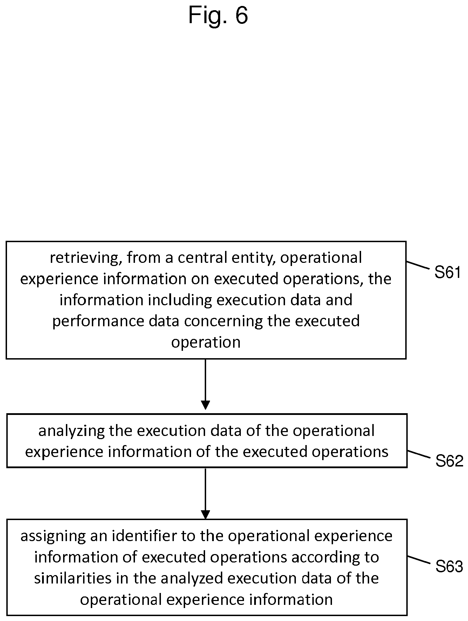

Fig. 6 is a flowchart illustrating an example of a method according to example versions of the present invention.

According to example versions of the present invention, the method may be implemented in or may be part of an analysis entity, like an Analytics Entity or the like. The method comprises retrieving, from a central entity, operational experience information on executed operations in step S61, the information including execution data and performance data concerning the executed operation, analyzing the execution data of the operational experience information of the executed operations in step S62, and assigning an identifier to the operational experience information of executed operations according to similarities in the analyzed execution data of the operational experience information in step S63.

According to example versions of the present invention, the method further comprises assigning the same identifier to operational experience information having similarities in the analyzed execution data, and assigning different identifiers to operational experience information having no similarities in the analyzed execution data, and transmitting the operational experience information to which the identifier is assigned to the central entity.

According to example versions of the present invention, the method further comprises arranging the operational experience information based on an identifier assigned to each of the operational experience information, where operational experience information having similarities in the execution data have the same identifier and are arranged in the same group.

According to example versions of the present invention, the method further comprises calculating a diagnosis value of the executed operation based on the performance data of the executed operation and performance data of previous executed operations having similarities in at least some of the execution data, and transmitting the diagnosis value associated with the operational experience information of the executed operation to the central entity.

According to example versions of the present invention, the performance data of the executed operation includes at least one of an assessment score, key performance indicators, customer perceived experience, service quality, and the execution data include at least one of activation data, records, reason, target, status attributes, and triggers concerning the executed operation.

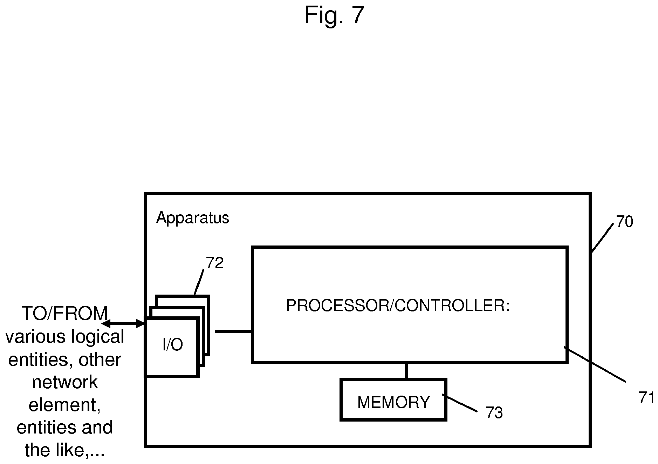

Fig. 7 is a block diagram showing an example of an apparatus according to example versions of the present invention.

In Fig. 7, a block circuit diagram illustrating a configuration of an apparatus 70 is shown, which is configured to implement the above described aspects of the invention. It is to be noted that the apparatus 70 shown in Fig. 7 may comprise several further elements or functions besides those described herein below, which are omitted herein for the sake of simplicity as they are not essential for understanding the invention. Furthermore, the apparatus may be also another device having a similar function, such as a chipset, a chip, a module etc., which can also be part of an apparatus or attached as a separate element to the apparatus, or the like.

The apparatus 70 may comprise a processing function or processor 71, such as a CPU or the like, which executes instructions given by programs or the like. The processor 71 may comprise one or more processing portions dedicated to specific processing as described below, or the processing may be run in a single processor. Portions for executing such specific processing may be also provided as discrete elements or within one or further processors or processing portions, such as in one physical processor like a CPU or in several physical entities, for example. Reference sign 72 denotes transceiver or input/output (I/O) units (interfaces) connected to the processor 71. The I/O units 72 may be used for communicating with one or more other network elements, entities, terminals or the like. The I/O units 72 may be a combined unit comprising communication equipment towards several network elements, or may comprise a distributed structure with a plurality of different interfaces for different network elements. Reference sign 73 denotes a memory usable, for example, for storing data and programs to be executed by the processor 71 and/or as a working storage of the processor 71.

The processor 71 is configured to execute processing related to the above described aspects. In particular, the apparatus 70 may be implemented in or may be part of a logically central entity like a EHD including an analytics entity or the like, and may be configured to perform a method as described in connection with Fig. 3. Thus, the processor 71 is configured to perform collecting operational experience information on executed operations from various logical entities via an interface, the collected operational experience information including execution data, and performance data concerning the executed operation, analyzing the operational experience information of the executed operations, storing the operational experience information of the executed operations in the central entity, and arranging the operational experience information of executed operations into different groups in the central entity according to similarities in the analyzed execution data of the operational experience information.

According to other example versions of the present invention, the apparatus 70 may be implemented in or may be part of a management entity, like a Decision Support System or the like, and may be configured to perform a method as described in connection with Fig. 4. Thus, the processor 71 is configured to perform retrieving operational experience information of at least one previously executed operation via an interface from a central entity, and processing a planned operation under consideration of the retrieved operational experience information.

According to other example not covered by the claims, the apparatus 70 may be implemented in or may be part of a logically central entity, like a EHD or the like, and may be configured to perform a method as described in connection with Fig. 5. Thus, the processor 71 is configured to perform collecting operational experience information on executed operations from various logical entities via an interface, the collected operational experience information including execution data and performance data concerning the executed operation, and storing the collected operational experience information of the executed operations, and arranging the operational experience information of executed operations into different groups in the central entity according to similarities in the execution data of the operational experience information.

According to other example not covered by the claims, the apparatus 70 may be implemented in or may be part of an analysis entity, like an Analytics Entity or the like, and may be configured to perform a method as described in connection with Fig. 6. Thus, the processor 71 is configured to perform retrieving, from a central entity, operational experience information on executed operations, the information including execution data and performance data concerning the executed operation, analyzing the execution data of the operational experience information of the executed operations, assigning an identifier to the operational experience information of executed operations according to similarities in the analyzed execution data of the operational experience information.

For further details regarding the functions of the apparatus 70, reference is made to the description of the method according to example versions of the present invention as described in connection with Figs. 3 to 6.

Thus, it is noted that the apparatus for use in logically central entity including the analytics entity, the apparatus for use in a analysis entity, the apparatus for use in a management entity, and the apparatus for use in a logically central entity generally have the same structural components, wherein these components are configured to execute the respective functions of the entities, respectively, as set out above.

In the foregoing exemplary description of the apparatus, only the units/means that are relevant for understanding the principles of the invention have been described using functional blocks. The apparatus may comprise further units/means that are necessary for its respective operation, respectively. However, a description of these units/means is omitted in this specification.

Abbreviations:
- AE: Analytics Entity
- CEM: Customer Experience Management
- CM: Configuration Management
- DSS: Decision Support System
- OD: Operational Diagnosis
- EHD: Event History Database
- KPI: Key Performance Indicator
- MLB: Mobile Load Balancing
- MO DN: Managed Object's Distinguished Name
- MRO: Mobility Robustness Optimization
- NW: Network
- OEI: Operational Experience Instance
- OSS: Operations Support System
- PM: Performance Management
- PMD: Policy Management Database
- QoE: Quality of customer Experience
- RNP: Radio Network Planning
- SFI_IDSON: Function Instance Identification
- SOI: SON Operation Instance
- SON: Self Organizing Networks
- TS: Traffic Steering

## Claims

1. A method for use in a logically central entity, comprising:
collecting (S31) operational experience information related to impacts on network performance due to configuration management changes on executed configuration management change operations from various logical entities via an interface,
the collected operational experience information including execution data involved in the execution of configuration management change operations and performance data concerning the executed operation, wherein the execution data includes all data particles relevant for execution of a self organizing network operation,
storing (S33) the collected operational experience information of the executed operations,
arranging (S34) the operational experience information of executed operations into different groups in the central entity according to similarities in the execution data of the operational experience information, the execution data relating to similarities between different instances of the execution data relating to different configuration management events;
receiving a request relating to a planned configuration management change operation and providing a response predicting an outcome of the planned configuration management change operation based on stored operational experience information to enable a decision to be made about the planned configuration management change operation.

2. The method according to claim 1, wherein
the operational experience information has been pre-processed by the various logical entities and exchanged between them via other relevant interfaces to enable the pre-processing.

3. The method according to claim 1 or 2, wherein
the performance data is obtained from a performance management database (17), the performance data being calculated by a verification function (10) based on parameters obtained via an interface from the performance management database, and transferred back to the performance management database.

4. The method according to any one of claims 1 to 3, further comprising
calculating a diagnosis value of the executed operation based on the performance data of the executed operation and performance data of previous executed operations having similarities in at least some of the execution data, and
storing the calculated diagnosis value in association with the operational experience information.

5. A method for use in a management entity, comprising:
retrieving (S41), via an interface from a logically central entity, operational experience information related to impacts on network performance due to configuration management changes of at least one previously executed configuration management change operation,
analyzing execution data included in the operational experience information and determining whether the execution data of the previously executed operation have similarities with at least some of execution data of a planned configuration management change operation, wherein the execution data includes all data particles relevant for execution of a self organizing network operation,
sending a request relating to the planned configuration management change operation to the logically central entity, and receiving a response from the logically central entity predicting an outcome of the planned configuration management change operation based on stored operational experience information; and
processing (S42) the planned configuration management change operation under consideration of the retrieved operational experience information to enable a decision to be made about the planned configuration management change operation.

6. The method according to claim 5, further comprising:
if it is determined that the execution data have similarities,
predicting an outcome of the planned operation based on the retrieved operational experience information.

7. The method according to claim 6, further comprising:
determining whether to execute the planned operation based on the predicted outcome of the planned operation.

8. The method according to claim 5, further comprising:
identifying the execution data of an operation to be executed,
searching the central entity for stored operational experience information of previous operations based on the identified execution data,
analyzing the retrieved operational experience information of the previous operations,
if the previous operations having similarities in at least some of the execution data resulted in positive operational experiences,
retrieving parameters of the previous operations having similarities in at least some of the execution data from the operational experience information, and
applying the retrieved parameters for the operation to be executed.

9. The method according to claim 8, further comprising:
if the previous operations having similarities in at least some of the execution data resulted in negative operational experiences,
rejecting the execution of the planned operation.

10. An apparatus (70) for use in a logically central entity, comprising:
at least one processor (71), and
at least one memory (73) for storing instructions to be executed by the processor, wherein
the at least one memory and the instructions are configured to, with the at least one processor, cause the apparatus at least to perform:
collecting (S31) operational experience information related to impacts on network performance due to configuration management changes on executed configuration management change operations from various logical entities via an interface,
the collected operational experience information including execution data involved in the execution of configuration management change operations and performance data concerning the executed operation, wherein the execution data includes all data particles relevant for execution of a self organizing network operation,
storing (S33) the collected operational experience information of the executed operations,
arranging (S34) the operational experience information of executed operations into different groups in the central entity according to similarities in the execution data of the operational experience information, and
receiving a request relating to a planned configuration management change operation and providing a response predicting an outcome of the planned configuration management change operation based on stored operational experience information to enable a decision to be made about the planned configuration management change operation.

11. The apparatus (70) according to claim 10, wherein
the operational experience information has been pre-processed by the various logical entities and exchanged between them via other relevant interfaces to enable the pre-processing.

12. The apparatus (70) according to claim 10 or 11, wherein
the performance data is obtained from a performance management database (17), the performance data being calculated by a verification function (10) based on parameters obtained via an interface from the performance management database, and transferred back to the performance management database.

13. The apparatus (70) according to any one of claims 10 to 12, wherein the at least one memory (73) and the instructions are further configured to, with the at least one processor, cause the apparatus at least to perform:
calculating a diagnosis value of the executed operation based on the performance data of the executed operation and performance data of previous executed operations having similarities in at least some of the execution data, and
storing the calculated diagnosis value in association with the operational experience information.

14. An apparatus (70) for use in a management entity, comprising:
at least one processor (71), and
at least one memory (73) for storing instructions to be executed by the processor, wherein
the at least one memory and the instructions are configured to, with the at least one processor, cause the apparatus at least to perform:
retrieving (S41), via an interface from a central entity, operational experience information related to impacts on network performance due to configuration management changes of at least one previously executed configuration management change operation,
analyzing execution data included in the operational experience information and determining whether execution data of the at least one previously executed operation have similarities with at least some execution data of a planned configuration management change operation, wherein the execution data includes all data particles relevant for execution of a self organizing network operation,
sending a request relating to the planned configuration management change operation to the logically central entity, and receiving a response from the logically central entity predicting an outcome of the planned configuration management change operation based on stored operational experience information; and
processing (S42) the planned configuration management change operation under consideration of the retrieved operational experience information to enable a decision to be made about the planned configuration management change operation.

15. A computer program product including a program for a processing device, comprising software code portions for performing the method of any one of claims 1 to 9 when the program is run on the processing device.

## Patentansprüche

1. Verfahren zur Verwendung in einer logisch zentralen Einheit, aufweisend:
Sammeln (S31) von Betriebserfahrungsinformationen in Bezug auf Auswirkungen auf Netzleistung aufgrund von Konfigurationsmanagementänderungen bei ausgeführten Konfigurationsmanagement-Änderungsoperationen von verschiedenen logischen Einheiten über eine Schnittstelle,
wobei die gesammelten Betriebserfahrungsinformationen Ausführungsdaten, die in der Ausführung von Konfigurationsmanagement-Änderungsoperationen beteiligt sind, und Leistungsdaten betreffend die ausgeführte Operation enthalten, wobei die Ausführungsdaten alle Datenteile enthalten, die für die Ausführung eines selbstorganisierenden Netzwerkbetriebs relevant sind,
Speichern (S33) der gesammelten Betriebserfahrungsinformationen der ausgeführten Operationen,
Einordnen (S34) der Betriebserfahrungsinformationen von ausgeführten Operationen in verschiedene Gruppen in der zentralen Einheit gemäß Ähnlichkeiten in den Ausführungsdaten der Betriebserfahrungsinformationen,
wobei die Ausführungsdaten sich auf Ähnlichkeiten zwischen verschiedenen Instanzen der Ausführungsdaten bezüglich unterschiedlicher Konfigurationsmanagementereignisse beziehen;
Empfangen einer Anforderung bezüglich einer geplanten Konfigurationsmanagement-Änderungsoperation und Bereitstellen einer Antwort, die ein Ergebnis der geplanten Konfigurationsmanagement-Änderungsoperation vorhersagt,
basierend auf gespeicherten Betriebserfahrungsinformationen, um zu ermöglichen, dass eine Entscheidung über den geplanten Konfigurationsmanagement-Änderungsvorgang getroffen wird.

2. Verfahren nach Anspruch 1, bei welchem
die Betriebserfahrungsinformationen von den verschiedenen logischen Einheiten vorverarbeitet und, um die Vorverarbeitung zu ermöglichen, zwischen ihnen über andere relevante Schnittstellen ausgetauscht worden sind.

3. Verfahren nach Anspruch 1 oder 2, bei welchem
die Leistungsdaten aus einer Leistungsmanagement-Datenbank (17) bezogen werden, wobei die Leistungsdaten durch eine Verifikationsfunktion (10) auf der Basis von über eine Schnittstelle von der Leistungsmanagement-Datenbank erhaltenen Parametern berechnet und an die Leistungsmanagement-Datenbank zurückübertragen werden.

4. Verfahren nach einem der Ansprüche 1 bis 3, ferner aufweisend:
Berechnen eines Diagnosewerts der ausgeführten Operation basierend auf den Leistungsdaten der ausgeführten Operation und Leistungsdaten von zuvor ausgeführten Operationen mit Ähnlichkeiten in wenigstens ein paar der Ausführungsdaten, und
Speichern des berechneten Diagnosewertes in Verbindung mit den Betriebserfahrungsinformation.

5. Verfahren zur Verwendung in einer Verwaltungseinheit, aufweisend:
Abrufen (S41) von Betriebserfahrungsinformationen in Bezug auf Auswirkungen auf Netzleistung aufgrund von Konfigurationsmanagementänderungen wenigstens einer zuvor ausgeführten Konfigurationsmanagement-Änderungsoperation über eine Schnittstelle von einer logisch zentralen Entität,
Analysieren von Ausführungsdaten, die in den Betriebserfahrungsinformationen enthalten sind, und Ermitteln, ob die Ausführungsdaten der zuvor ausgeführten Operation Ähnlichkeiten mit wenigstens ein paar der Ausführungsdaten einer geplanten Konfigurationsmanagement-Änderungsoperation haben, wobei die Ausführungsdaten alle Datenteile enthalten, die zur Ausführung eines selbstorganisierenden Netzwerkbetriebs relevant sind,
Senden einer Anforderung bezüglich der geplanten Konfigurationsmanagement-Änderungsoperation an die logisch zentrale Einheit und Empfangen einer Antwort von der logisch zentralen Einheit, die ein Ergebnis der geplanten Konfigurationsmanagement-Änderungsoperation basierend auf gespeicherten Betriebserfahrungsinformationen vorhersagt; und
Verarbeiten (S42) der geplanten Konfigurationsmanagement-Änderungsoperation unter Berücksichtigung der abgerufenen Betriebserfahrungsinformationen, um zu ermöglichen, dass eine Entscheidung über die geplante Konfigurationsmanagement-Änderungsoperation getroffen wird.

6. Verfahren nach Anspruch 5, ferner aufweisend:
wenn festgestellt wird, dass die Ausführungsdaten Ähnlichkeiten haben, Vorhersagen eines Ergebnisses der geplanten Operation basierend auf den abgerufenen Betriebserfahrungsinformationen.

7. Verfahren nach Anspruch 6, ferner aufweisend:
Ermitteln, ob die geplante Operation ausgeführt werden soll, basierend auf dem vorhergesagten Ergebnis der geplanten Operation.

8. Verfahren nach Anspruch 5, ferner aufweisend:
Identifizieren der Ausführungsdaten einer auszuführenden Operation, Suchen der zentralen Einheit für gespeicherte Betriebserfahrungsinformationen vorheriger Operationen basierend auf den identifizierten Ausführungsdaten, Analysieren der abgerufenen Betriebserfahrungsinformationen der vorherigen Operationen,
falls die vorherigen Operationen mit Ähnlichkeiten in wenigstens ein paar der Ausführungsdaten zu positiven Betriebserfahrungen führten,
Abrufen von Parametern der vorherigen Operationen mit Ähnlichkeiten in wenigstens ein paar der Ausführungsdaten von den Betriebserfahrungsinformationen, und
Anwenden der abgerufenen Parameter für die auszuführende Operation.

9. Verfahren nach Anspruch 8, ferner aufweisend:
falls die vorherigen Operationen mit Ähnlichkeiten in wenigstens ein paar der Ausführungsdaten zu negativen Betriebserfahrungen führten,
Ablehnen der Ausführung der geplanten Operation.

10. Vorrichtung (70) zur Verwendung in einer logisch zentralen Einheit, aufweisend:
wenigstens einen Prozessor (71), und
wenigstens einen Speicher (73) zum Speichern von Anweisungen, die vom Prozessor auszuführen sind, wobei
der wenigstens eine Speicher und die Anweisungen konfiguriert sind, um mit dem wenigstens einen Prozessor die Vorrichtung zumindest zu veranlassen, um durchzuführen:
Sammeln (S31) von Betriebserfahrungsinformationen in Bezug auf Auswirkungen auf Netzleistung aufgrund von Konfigurationsmanagementänderungen bei ausgeführten Konfigurationsmanagement-Änderungsoperationen von verschiedenen logischen Einheiten über eine Schnittstelle,
wobei die gesammelten Betriebserfahrungsinformationen Ausführungsdaten, die in der Ausführung von Konfigurationsmanagement-Änderungsoperationen beteiligt sind, und Leistungsdaten betreffend die ausgeführte Operation enthalten, wobei die Ausführungsdaten alle Datenteile enthalten, die für die Ausführung eines selbstorganisierenden Netzwerkbetriebs relevant sind,
Speichern (S33) der gesammelten Betriebserfahrungsinformationen der ausgeführten Operationen,
Einordnen (S34) der Betriebserfahrungsinformationen von ausgeführten Operationen in verschiedene Gruppen in der zentralen Einheit gemäß Ähnlichkeiten in den Ausführungsdaten der Betriebserfahrungsinformationen, und
Empfangen einer Anforderung bezüglich einer geplanten Konfigurationsmanagement-Änderungsoperation und Bereitstellen einer Antwort, die ein Ergebnis der geplanten Konfigurationsmanagement-Änderungsoperation vorhersagt, basierend auf gespeicherten Betriebserfahrungsinformationen, um zu ermöglichen, dass eine Entscheidung über den geplanten Konfigurationsmanagement-Änderungsvorgang getroffen wird.

11. Vorrichtung (70) nach Anspruch 10, bei welcher
die Betriebserfahrungsinformationen von den verschiedenen logischen Einheiten vorverarbeitet und, um die Vorverarbeitung zu ermöglichen, zwischen ihnen über andere relevante Schnittstellen ausgetauscht worden sind.

12. Vorrichtung (70) nach Anspruch 10 oder 11, bei welcher
die Leistungsdaten werden aus einer Leistungsmanagement-Datenbank (17) bezogen werden, wobei die Leistungsdaten durch eine Verifikationsfunktion (10) basierend auf über eine Schnittstelle von der Leistungsmanagement-Datenbank erhaltenen Parametern berechnet und an die Leistungsmanagement-Datenbank zurückübertragen werden.

13. Vorrichtung (70) nach einem der Ansprüche 10 bis 12, bei welcher der wenigstens eine Speicher (73) und die Anweisungen ferner konfiguriert sind, um mit dem wenigstens einen Prozessor die Vorrichtung zumindest zu veranlassen, um durchzuführen:
Berechnen eines Diagnosewerts der ausgeführten Operation basierend auf den Leistungsdaten der ausgeführten Operation und Leistungsdaten von zuvor ausgeführten Operationen mit Ähnlichkeiten in wenigstens ein paar der Ausführungsdaten, und
Speichern des berechneten Diagnosewertes in Verbindung mit den Betriebserfahrungsinformation.

14. Vorrichtung (70) zur Verwendung in einer Verwaltungseinheit, aufweisend:
wenigstens einen Prozessor (71), und
wenigstens einen Speicher (73) zum Speichern von Anweisungen, die vom Prozessor auszuführen sind, wobei
der wenigstens eine Speicher und die Anweisungen konfiguriert sind, um mit dem wenigstens einen Prozessor die Vorrichtung zumindest zu veranlassen, um durchzuführen:
Abrufen (S41) von Betriebserfahrungsinformationen in Bezug auf Auswirkungen auf Netzleistung aufgrund von Konfigurationsmanagementänderungen wenigstens einer zuvor ausgeführten Konfigurationsmanagement-Änderungsoperation über eine Schnittstelle von einer logisch zentralen Entität,
Analysieren von Ausführungsdaten, die in den Betriebserfahrungsinformationen enthalten sind, und Ermitteln, ob die Ausführungsdaten der wenigstens einen zuvor ausgeführten Operation Ähnlichkeiten mit wenigstens ein paar der Ausführungsdaten einer geplanten Konfigurationsmanagement-Änderungsoperation haben,
wobei die Ausführungsdaten alle Datenteile enthalten, die zur Ausführung eines selbstorganisierenden Netzwerkbetriebs relevant sind,
Senden einer Anforderung bezüglich der geplanten Konfigurationsmanagement-Änderungsoperation an die logisch zentrale Einheit und Empfangen einer Antwort von der logisch zentralen Einheit, die ein Ergebnis der geplanten Konfigurationsmanagement-Änderungsoperation basierend auf gespeicherten Betriebserfahrungsinformationen vorhersagt; und
Verarbeiten (S42) der geplanten Konfigurationsmanagement-Änderungsoperation unter Berücksichtigung der abgerufenen Betriebserfahrungsinformationen, um zu ermöglichen, dass eine Entscheidung über die geplante Konfigurationsmanagement-Änderungsoperation getroffen wird.

15. Computerprogrammprodukt mit einem Programm für eine Verarbeitungsvorrichtung, aufweisend Softwarecodeteile zum Durchführen des Verfahrens nach einem der Ansprüche 1 bis 9, wenn das Programm auf der Verarbeitungsvorrichtung ausgeführt wird.

## Revendications

1. Procédé servant à des fins d'utilisation dans une entité centrale logique, comportant les étapes consistant à :
collecter (S31) des informations d'expériences opérationnelles se rapportant à des impacts sur la performance du réseau en raison de changements de gestion de configuration sur des opérations de changement de gestion de configuration exécutées en provenance de différentes entités logiques par le biais d'une interface,
les informations d'expériences opérationnelles collectées comprenant des données d'exécution impliquées dans l'exécution d'opérations de changement de gestion de configuration et des données de performance concernant l'opération exécutée, dans lequel les données d'exécution comprennent toutes les particules de données pertinentes pour l'exécution d'une opération de réseau à auto-organisation,
stocker (S33) les informations d'expériences opérationnelles collectées des opérations exécutées,
arranger (S34) les informations d'expériences opérationnelles des opérations exécutées en différents groupes dans l'entité centrale en fonction de similarités dans les données d'exécution des informations d'expériences opérationnelles, les données d'exécution se rapportant à des similarités entre différentes instances des données d'exécution se rapportant à différents événements de gestion de configuration ;
recevoir une demande se rapportant à une opération de changement de gestion de configuration planifiée et fournir une réponse consistant à prédire un résultat de l'opération de changement de gestion de configuration planifiée en se basant sur des informations d'expériences opérationnelles stockées pour permettre de prendre une décision à propos de l'opération de changement de gestion de configuration planifiée.

2. Procédé selon la revendication 1, dans lequel
les informations d'expériences opérationnelles ont été prétraitées par les différentes entités logiques et échangées entre elles par le biais d'autres interfaces pertinentes pour permettre le prétraitement.

3. Procédé selon la revendication 1 ou la revendication 2, dans lequel
les données de performance sont obtenues en provenance d'une base de données de gestion de performance (17), les données de performance étant calculées par une fonction de vérification (10) en se basant sur des paramètres obtenus par le biais d'une interface en provenance de la base de données de gestion de performance, et transférées de retour à la base de données de gestion de performance.

4. Procédé selon l'une quelconque des revendications 1 à 3, comportant par ailleurs les étapes consistant à :
calculer une valeur de diagnostic de l'opération exécutée en se basant sur les données de performance de l'opération exécutée et sur les données de performance des précédentes opérations exécutées ayant des similarités dans au moins certaines des données d'exécution, et
stocker la valeur de diagnostic calculée en association avec les informations d'expériences opérationnelles.

5. Procédé servant à des fins d'utilisation dans une entité de gestion, comportant les étapes consistant à :
récupérer (S41), par le biais d'une interface en provenance d'une entité centrale logique, des informations d'expériences opérationnelles se rapportant à des impacts sur la performance de réseau en raison de changements de gestion de configuration d'au moins une opération de changement de gestion de configuration exécutée précédemment,
analyser les données d'exécution se trouvant dans les informations d'expériences opérationnelles et déterminer si les données d'exécution de l'opération exécutée précédemment ont des similarités avec au moins certaines données d'exécution d'une opération de changement de gestion de configuration planifiée, dans lequel les données d'exécution comprennent toutes les particules de données pertinentes pour l'exécution d'une opération de réseau à auto-organisation,
envoyer une demande se rapportant à l'opération de changement de gestion de configuration planifiée à l'entité centrale logique, et recevoir une réponse en provenance de l'entité centrale logique qui prédit un résultat de l'opération de changement de gestion de configuration planifiée en se basant sur des informations d'expériences opérationnelles stockées ; et
traiter (S42) l'opération de changement de gestion de configuration planifiée faisant l'objet d'une considération des informations d'expériences opérationnelles récupérées pour permettre de prendre une décision à propos de l'opération de changement de gestion de configuration planifiée.

6. Procédé selon la revendication 5, comportant par ailleurs :
s'il est déterminé que les données d'exécution ont des similarités,
l'étape consistant à prédire un résultat de l'opération planifiée en se basant sur les informations d'expériences opérationnelles récupérées.

7. Procédé selon la revendication 6, comportant par ailleurs l'étape consistant à :
déterminer s'il faut exécuter l'opération planifiée en se basant sur le résultat prédit de l'opération planifiée.

8. Procédé selon la revendication 5, comportant par ailleurs les étapes consistant à :
identifier les données d'exécution d'une opération destinée à être exécutée,
examiner l'entité centrale à des fins de recherche d'informations d'expériences opérationnelles stockées d'opérations précédentes en se basant sur les données d'exécution identifiées,
analyser les informations d'expériences opérationnelles récupérées des opérations précédentes,
si les opérations précédentes ont des similarités dans au moins certaines des données d'exécution qui ont donné lieu à des expériences opérationnelles positives,
récupérer les paramètres des opérations précédentes ayant des similarités dans au moins certaines des données d'exécution en provenance des informations d'expériences opérationnelles, et
appliquer les paramètres récupérés pour l'opération destinée à être exécutée.

9. Procédé selon la revendication 8, comportant par ailleurs l'étape consistant à :
si les opérations précédentes ont des similarités dans au moins certaines des données d'exécution qui ont donné lieu à des expériences opérationnelles négatives,
rejeter l'exécution de l'opération planifiée.

10. Appareil (70) servant à des fins d'utilisation dans une entité centrale logique, comportant :
au moins un processeur (71), et
au moins une mémoire (73) servant à stocker des instructions destinées à être exécutées par le processeur, dans lequel
ladite au moins une mémoire et les instructions sont configurées pour, avec ledit au moins un processeur, amener l'appareil à effectuer au moins les étapes consistant à :
collecter (S31) des informations d'expériences opérationnelles se rapportant à des impacts sur la performance du réseau en raison de changements de gestion de configuration sur des opérations de changement de gestion de configuration exécutées en provenance de différentes entités logiques par le biais d'une interface,
les informations d'expériences opérationnelles collectées comprenant des données d'exécution impliquées dans l'exécution d'opérations de changement de gestion de configuration et des données de performance concernant l'opération exécutée, dans lequel les données d'exécution comprennent toutes les particules de données pertinentes pour l'exécution d'une opération de réseau à auto-organisation,
stocker (S33) les informations d'expériences opérationnelles collectées des opérations exécutées,
arranger (S34) les informations d'expériences opérationnelles des opérations exécutées en différents groupes dans l'entité centrale en fonction de similarités dans les données d'exécution des informations d'expériences opérationnelles, et
recevoir une demande se rapportant à une opération de changement de gestion de configuration planifiée et fournir une réponse consistant à prédire un résultat de l'opération de changement de gestion de configuration planifiée en se basant sur des informations d'expériences opérationnelles stockées pour permettre de prendre une décision à propos de l'opération de changement de gestion de configuration planifiée.

11. Appareil (70) selon la revendication 10, dans lequel
les informations d'expériences opérationnelles ont été prétraitées par les différentes entités logiques et échangées entre elles par le biais d'autres interfaces pertinentes pour permettre le prétraitement.

12. Appareil (70) selon la revendication 10 ou la revendication 11, dans lequel
les données de performance sont obtenues en provenance d'une base de données de gestion de performance (17), les données de performance étant calculées par une fonction de vérification (10) en se basant sur des paramètres obtenus par le biais d'une interface en provenance de la base de données de gestion de performance, et transférées de retour à la base de données de gestion de performance.

13. Appareil (70) selon l'une quelconque des revendications 10 à 12, dans lequel ladite au moins une mémoire (73) et les instructions sont configurées pour, avec ledit au moins un processeur, amener l'appareil à effectuer au moins les étapes consistant à :
calculer une valeur de diagnostic de l'opération exécutée en se basant sur les données de performance de l'opération exécutée et sur les données de performance des précédentes opérations exécutées ayant des similarités dans au moins certaines des données d'exécution, et
stocker la valeur de diagnostic calculée en association avec les informations d'expériences opérationnelles.

14. Appareil (70) servant à des fins d'utilisation dans une entité de gestion, comportant :
au moins un processeur (71), et
au moins une mémoire (73) servant à stocker des instructions destinées à être exécutées par le processeur, dans lequel
ladite au moins une mémoire et les instructions sont configurées pour, avec ledit au moins un processeur, amener l'appareil à effectuer au moins les étapes consistant à :
récupérer (S41), par le biais d'une interface en provenance d'une entité centrale, des informations d'expériences opérationnelles se rapportant à des impacts sur la performance de réseau en raison de changements de gestion de configuration d'au moins une opération de changement de gestion de configuration exécutée précédemment,
analyser les données d'exécution se trouvant dans les informations d'expériences opérationnelles et déterminer si les données d'exécution de ladite au moins une opération exécutée précédemment ont des similarités avec au moins certaines données d'exécution d'une opération de changement de gestion de configuration planifiée, dans lequel les données d'exécution comprennent toutes les particules de données pertinentes pour l'exécution d'une opération de réseau à auto-organisation,
envoyer une demande se rapportant à l'opération de changement de gestion de configuration planifiée à l'entité centrale logique, et recevoir une réponse en provenance de l'entité centrale logique qui prédit un résultat de l'opération de changement de gestion de configuration planifiée en se basant sur des informations d'expériences opérationnelles stockées ; et
traiter (S42) l'opération de changement de gestion de configuration planifiée faisant l'objet d'une considération des informations d'expériences opérationnelles récupérées pour permettre de prendre une décision à propos de l'opération de changement de gestion de configuration planifiée.

15. Produit programme informatique comprenant un programme pour un dispositif de traitement, comportant des parties de code de logiciel servant à effectuer le procédé selon l'une quelconque des revendications 1 à 9 quand le programme est exécuté sur le dispositif de traitement.
